# EUROPEAN PATENT SPECIFICATION

(11) **EP 1 998 131 B1**
(45) Date of publication and mention of the grant of the patent: **02.05.2012**
(21) Application number: 08009819.7
(22) Date of filing: 29.05.2008
(51) Int. Cl.: F28D 7/08, F28D 9/00

(54) **Gas cooler for hot-water supply system**
Gaskühler für Heißwasserversorgungssystem
Refroidisseur de gaz pour système d'alimentation en eau chaude

(30) Priority: 29.05.2007 JP 2007141708
(43) Date of publication of application: 03.12.2008
(73) Proprietor: Sanden Corporation, Isesaki-shi, Gunma 372-8502 (JP)
(72) Inventor: Murakoshi, Yasushi, Isesaki-shi, Gunma 372-8502 (JP); Kado, Hirotaka, Isesaki-shi, Gunma 372-8502 (JP); Kato, Isao, Isesaki-shi, Gunma 372-8502 (JP); Kobayashi, Satoshi, Isesaki-shi, Gunma 372-8502 (JP)
(74) Representative: Feldmeier, Jürgen

(56) References cited:
- WO-A-2006/007656
- DE-U1- 9 204 952
- JP-A- 2003 314 975
- US-A- 3 570 593

## Description

### BACKGROUND OF THE INVENTION

### Field of the Invention

The present invention relates to a gas cooler incorporated in a hot-water supply system provided with a heat pump unit.

### Description of the Related Art

Hot-water supply systems of this type have come to be widely used with a view to saving energy and mitigating the load on the global environment. The performance of a hot-water supply system is evaluated in terms of coefficient of performance (COP), and the coefficient of performance depends heavily upon the heat exchange efficiency of the gas cooler in the system. Specifically, the gas cooler serves to transfer heat between the refrigerant flowing through the heat pump unit and the tank water flowing through the hot-water supply unit and thus is one of principal components that determine the performance of the hot-water supply system.

There have been known various types of gas cooler such as plate type besides tube-in-tube type and inner/outer tube type. In the plate-type gas cooler, tank water is caused to flow through the internal space of a box body formed by joining molded plates together, and a tube for conveying the refrigerant is arranged in the internal space of the box body (see Unexamined Japanese Patent Publication No. 2007-3014, hereinafter Patent Document 1) or wound around the box body (see Unexamined Japanese Patent Publication No. 2003-314975, hereinafter Patent Document 2), to allow heat to be transferred between the refrigerant and the tank water.

In Patent Document 1, however, the tube directly contacts with the tank water, and therefore, to prevent the refrigerant leaking out of the damaged tube from mixing with the tank water, it is essential that a refrigerant leak detection tube with a double-wall structure should be used as the refrigerant tube, which leads to increase in production costs of the gas cooler.

On the other hand, the gas cooler disclosed in Patent Document 2 is associated with the problem that the heat exchange efficiency is low, compared with the gas cooler disclosed in Patent Document 1.

Also, both of the gas coolers disclosed in Patent Documents 1 and 2 are of a single-layer type and take no account of a multi-layer type or stacked gas cooler. Thus, to obtain a desired heat exchange rate with the disclosed type of gas cooler, the gas cooler must unavoidably be increased in size and weight.

US-Patent US 3,570,593 discloses a heat exchanger having a plurality of passages. The heat exchanger is provided for a heat exchange between a first gaseous fluid and a second liquid fluid which are liable to react dangerously one with another. The tubes for conducting the second fluid are separated from various passages which conduct the first exchange fluid.

DE 92 04952 U discloses a heat exchanger having a plurality of box bodies stacked up and having a flow channel formed therein, a space defined between adjacent ones of the box bodies; and a tube for passing a refrigerant therethrough, the tube having several meandering sections.

### SUMMARY OF THE INVENTION

The present invention was created in view of the above circumstances, and an object thereof is to provide a gas cooler for a hot-water supply system which is improved in safety and heat exchange efficiency and also reduced in size, weight and production costs.

To achieve the object, an aspect of the present invention is a gas cooler for a hot-water supply system including a heat pump unit and a hot-water supply unit. The gas cooler allows heat to be transferred between a refrigerant flowing through a refrigerant circulation path of the heat pump unit and tank water flowing through a water circulation path of the hot-water supply unit to heat the tank water to a predetermined temperature, and comprises: a plurality of box bodies stacked up and having a flow channel formed therein for passing the tank water therethrough; a space defined between adjacent ones of the box bodies; and a tube for passing the refrigerant therethrough, the tube having one or more meandering sections, wherein the meandering section is positioned in the space in contact with the adjacent box bodies.

With the gas cooler, the refrigerant leaking accidentally out of the tube can be reliably prevented from mixing with the tank water, without the need for a refrigerant leak detection tube, thus making it possible to improve safety of the gas cooler at low cost.

Further, since the meandering section of the tube is disposed in contact with the adjacent box bodies, the heat exchange of the gas cooler is promoted, compared with the case where the tube is merely wound around the box body, thus making it possible to improve the heat exchange efficiency.

Each of the box bodies has an uneven inner surface.

With this arrangement, the area of heat transfer from the tank water flowing in the flow channel to the box bodies can be increased.

Compared with the case where the tube is arranged inside the box bodies, the inner surfaces of the box bodies can be made to have unevenness or irregularities of desired shape without the restraints of space imposed by the tube. This permits effective heat transfer from the tank water to the inner surfaces of the box bodies, thus further improving the heat exchange efficiency of the gas cooler.

Preferably, in the gas cooler of the hot-water supply system, the stacked box bodies have flow channels, respectively, connected in parallel with each other, and the tube has a plurality of meandering sections connected in parallel with each other.

With this arrangement, the tank water flowing in the individual flow channels of the box bodies is substantially uniformly heated by the refrigerant flowing in the individual meandering sections positioned in the respective spaces in contact with the adjacent box bodies, so that parallel heat exchange is carried out. Thus, especially in cases where the tank water is passed through the gas cooler at a relatively high flow rate, the tank water can be evenly heated with improved heat exchange efficiency of the gas cooler.

Alternatively, the stacked box bodies may have flow channels, respectively, connected in series with each other, and the tube may have a plurality of meandering sections connected in series with each other.

With this arrangement, the tank water flowing sequentially through the flow channels of the box bodies is heated in stages by the refrigerant flowing sequentially through the meandering sections positioned in the respective spaces in contact with the adjacent box bodies, so that series heat exchange is carried out. Thus, especially in cases where the tank water is passed through the gas cooler at a relatively low flow rate, the tank water can be heated to a high temperature significantly higher than the water temperature at the inlet of the gas cooler with improved heat exchange efficiency of the gas cooler.

Moreover, compared with the case where the meandering sections of the tube are connected in parallel, the layout of the tube can be simplified, making it possible to reduce the size, weight and production costs of the gas cooler.

Preferably, the gas cooler of the hot-water supply system further comprises at least one joint connecting the adjacent box bodies with each other, and a communication hole formed in the joint, and the flow channels communicate with each other through the communication hole.

Since the joint can be used as part of the tank water flow channel, a space-saving gas cooler can be provided which is also reduced in size, weight and production costs.

Preferably, the box bodies have a tank water inlet and a tank water outlet, and the box bodies have protuberances formed on inner surfaces thereof in such a manner that heights of the protuberances gradually decrease toward the water inlet and the water outlet.

This arrangement effectively prevents tank water scale from being deposited in the vicinities of the water inlet and the water outlet. Since the tank water can smoothly flow through the gas cooler, the heat exchange efficiency of the gas cooler further improves.

Preferably, the refrigerant and the tank water flow through the tube and the flow channel, respectively, generally in counter directions.

With this arrangement, it is possible to reliably prevent the situation where the refrigerant is heated by the tank water, namely, inverse heat exchange, whereby the gas cooler is further improved in heat exchange efficiency.

Preferably, the refrigerant used in the hot-water supply system is CO₂ gas.

In this case, the gas cooler serves to mitigate the load on the global environment yet is improved in safety and heat exchange efficiency and reduced in size, weight and production costs.

### BRIEF DESCRIPTION OF THE DRAWINGS

FIG. 1 illustrates a schematic configuration of a hot-water supply system;
FIG. 2 is a schematic cross-sectional view of a gas cooler in FIG. 1;
FIG. 3 is a schematic diagram illustrating how heat exchange between a refrigerant and tank water takes place in the gas cooler of FIG. 2;
FIG. 4 is a schematic cross-sectional view of a gas cooler according to a modification; and
FIG. 5 is a schematic diagram illustrating how heat exchange between the refrigerant and the tank water takes place in the gas cooler of FIG. 4.

### DETAILED DESCRIPTION OF THE PREFERRED EMBODIMENTS

A preferred embodiment of the present invention will be described below with reference to the accompanying drawings.

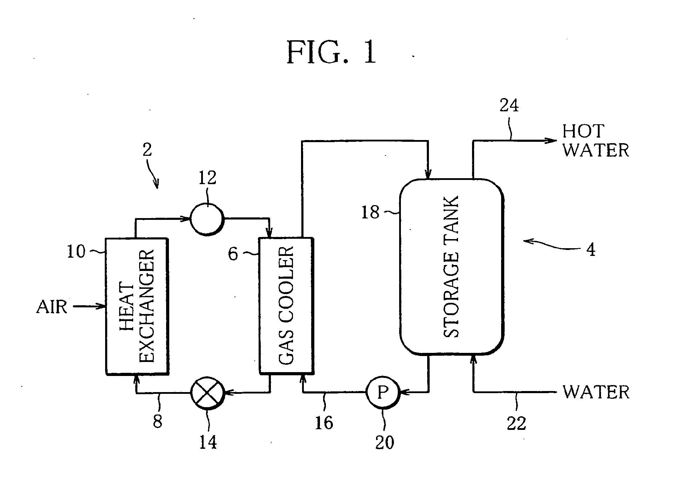

FIG. 1 schematically illustrates a hot-water supply system, which is roughly divided into a heat pump unit 2 and a hot-water supply unit 4. The units 2 and 4 are thermally connected to each other by a gas cooler 6.

Specifically, the heat pump unit 2 includes a refrigerant circulation path 8 for circulating a refrigerant, for example, CO₂ gas. An air-refrigerant heat exchanger 10 for exchanging heat between the atmosphere and the refrigerant, a compressor 12, the gas cooler 6 and an expansion valve 14 are inserted in the refrigerant circulation path 8.

On the other hand, the hot-water supply unit 4 includes a water circulation path 16 for circulating tank water therethrough. The gas cooler 6, a hot-water storage tank 18 and a circulation pump 20 are inserted in the water circulation path 16. The hot-water supply unit 4 also includes a supply water path 22 through which water is supplied to the storage tank 18, and a hot-water path 24 through which hot water in the storage tank 18 is delivered to outside.

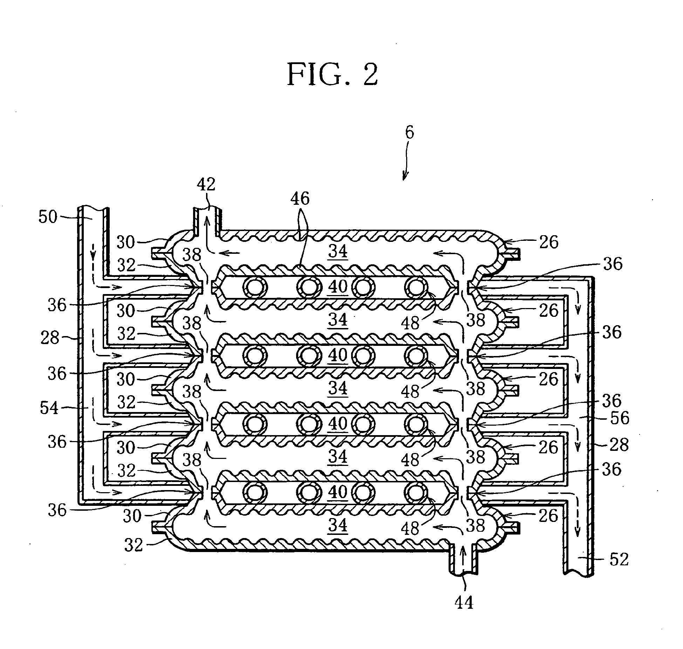

FIG. 2 schematically shows the gas cooler 6 in section. The gas cooler 6, which is a plate type, has five stacked box bodies 26 forming part of the water circulation path 16 and allowing the tank water to flow therethrough, and a tube 28 forming part of the refrigerant circulation path 8 and allowing the refrigerant to flow therethrough.

Each box body 26 comprises upper and lower plates 30 and 32 made of a material with high heat transferability such as stainless steel, copper or the like. The plates 30 and 32 are molded members each in the form of a deep tray and joined together at their raised edges, thus forming an internal space (flow channel) 34 therebetween.

Also, each box body 26 has joints 36 protruding integrally therefrom near opposite edges, or near opposite ends as viewed in section as illustrated in FIG. 2, to allow the box body 26 to be coupled to an adjacent one or ones. The joints 36 have communication holes 38 formed therein to connect the internal spaces 34 of the box bodies 26 with each other.

Further, a space 40 is defined between adjacent ones of the stacked box bodies 26 and is situated between the corresponding joints 36.

Among the stacked box bodies 26, the uppermost one has a water outlet 42 formed therein while the lowermost one has a water inlet 44 formed therein. The water outlet 42 and the water inlet 44 may be formed integrally with the respective box bodies 26.

The tank water is introduced from the water circulation path 16 into the lowermost box body 26 of the gas cooler 6 through the water inlet 44, then passed through the communication holes 38 and the internal spaces 34, and returned to the water circulation path 16 through the water outlet 42 of the gas cooler 6.

The plates 30 and 32 of each box body 26 have uneven inner surfaces. Specifically, ribbed ridges 46 protrude from the inner surfaces of the plates 30 and 32 toward the space 34, to thereby increase the inner surface area of the box body 26. The ribbed ridges 46 are preferably formed in such a manner that their heights gradually decrease toward the water inlet 44 and the water outlet 42. Alternatively, the heights of the ribbed ridges 46 may gradually decrease toward each communication hole 38. Also, instead of the ribbed ridges 46, protuberances of desired shape may be formed on the inner surfaces of the plates 30 and 32.

On the other hand, the tube 28 is a small-diameter tube made of a material with high heat transferability such as stainless steel or copper, like the plates 30 and 32, and has four meandering sections 48 bent in alternating directions in a zigzag fashion. Each meandering section 48 is located in the corresponding space 40 in contact with the outer surfaces of the adjacent box bodies 26 and fixed to the bodies 26 by brazing. In FIG. 2, the four meandering sections 48 are shown in cross section, and each meandering section 48 forming part of the tube 28 has three U-bends.

Also, the tube 28 has a refrigerant inlet 50 located close to the uppermost one of the stacked box bodies 26, and a refrigerant outlet 52 located close to the lowermost box body 26.

The refrigerant is introduced from the refrigerant circulation path 8 into the gas cooler 6 through the refrigerant inlet 50, then passed through the meandering sections 48, and returned to the refrigerant circulation path 8 from the gas cooler 6 through the refrigerant outlet 52. Namely, the refrigerant and the tank water are made to flow inside the gas cooler 6 generally in opposite or counter directions to cause heat exchange, so that the tank water is heated to a predetermined temperature. Each meandering section 48 of the tube 28 has its parallel portions spaced at regular intervals from each other within the space 40. Thus, since the parallel portions of the tube 28 are not in contact with each other, mutual heat exchange of the refrigerant does not occur.

In this embodiment, the tube 28 includes, in addition to the meandering sections 48, a refrigerant divergent header 54 located outside of the spaces 40 and close to the refrigerant inlet 50, and a refrigerant convergent header 56 located outside of the spaces 40 and close to the refrigerant outlet 52. Thus, as indicated by the dashed arrows in FIG. 2, the refrigerant introduced to the divergent header 54 from the refrigerant inlet 50 is supplied in parallel to the respective meandering sections 48, and the refrigerant flowing out in parallel from the respective meandering sections 48 runs together at the convergent header 56 and flows toward the refrigerant outlet 52.

In the box bodies 26, on the other hand, all joints 36 have respective communication holes 38 formed therethrough. Thus, as indicated by the solid-line arrows, the tank water introduced from the water inlet 44 is supplied in parallel to the respective spaces 34 through the communication holes 38, and the tank water flowing out in parallel from the respective spaces 34 runs together through the communication holes 38 and flows toward the water outlet 42.

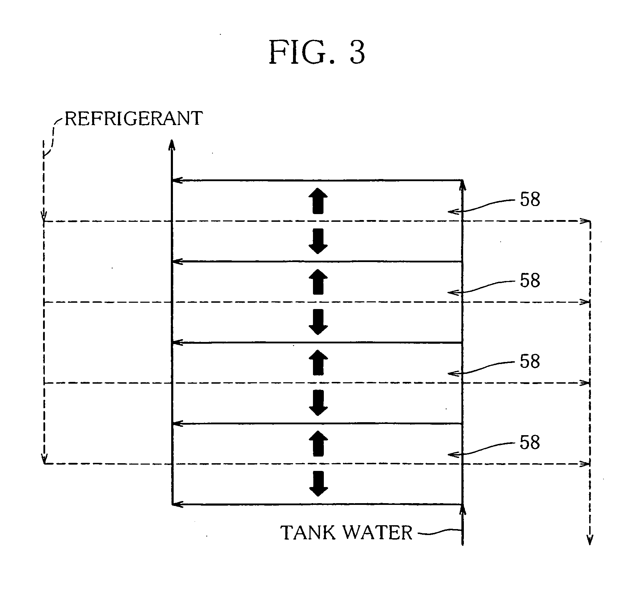

As schematically shown in FIG. 3, heat exchange between the refrigerant and the tank water takes place in respective heat exchange regions 58 in parallel with each other. Namely, the tank water flowing through the individual heat exchange regions 58 is heated substantially uniformly by the refrigerant, as indicated by the thick dark arrows. Thus, so-called parallel heat exchange is performed.

In the gas cooler 6 described above, each meandering section 48 of the tube 28 is arranged in the space 40 between the adjacent box bodies 26 and disposed in contact with the bodies 26. It is therefore possible to reliably prevent the refrigerant leaking accidentally out of the tube 28 from mixing with the tank water, without using a refrigerant leak detection tube, whereby safety of the gas cooler 6 can be enhanced at low cost.

Also, since the meandering sections 48 of the tube 28 are in contact with the adjacent box bodies 26, the heat exchange of the gas cooler 6 is promoted, compared with the case where the tube 28 is merely wound around the box bodies 26, making it possible to improve the heat exchange efficiency.

Further, compared with the case where the tube 28 is arranged in the internal spaces 34, the ribbed ridges 46 can be formed into a desired shape since the spaces 34 are not occupied by the tube 28, and an increased area can be spared for the transfer of heat from the box bodies 26 to the tank water flowing through the individual spaces 34. Thus, the heat exchange between the tube 28 and the box bodies 26 can be effectively promoted, making it possible to further enhance the heat exchange efficiency of the gas cooler 6.

Moreover, since the ribbed ridges 46 are formed such that their heights gradually decrease toward the water inlet 44, the water outlet 42 and the communication holes 38, it is possible to effectively prevent tank water scale from being deposited in the vicinities of the water inlet 44, the water outlet 42 and the communication holes 38. Accordingly, the tank water smoothly flows inside the gas cooler 6, so that the heat exchange efficiency of the gas cooler 6 further improves.

Also, the communication holes 38 are formed in the joints 36 so that the joints 36 may serve as tank water flow channels. It is therefore possible to provide a space-saving gas cooler, whereby the gas cooler 6 can be reduced in size, weight, and also in production costs.

In the above embodiment, the tube 28 has the divergent and convergent headers 54 and 56 besides the meandering sections 48, and the joints 36 of the box bodies 26 all have communication holes 38 formed therein. Accordingly, the tank water can be heated substantially uniformly by the refrigerant, so that the parallel heat exchange is performed in the respective heat exchange regions 58. Especially in cases where the tank water is passed through the gas cooler 6 at a relatively high flow rate, therefore, the tank water can be evenly heated with improved heat exchange efficiency of the gas cooler 6.

Furthermore, the refrigerant is made to flow through the tube 28 in a direction generally opposite to that of the tank water flowing through the spaces 34. It is therefore possible to reliably avoid the situation where the refrigerant is heated by the tank water, namely, inverse heat exchange, whereby the heat exchange efficiency of the gas cooler 6 can be further enhanced.

Thus, since the gas cooler 6 of this embodiment is significantly improved in heat exchange efficiency, the efficiency of the refrigeration cycle of the heat pump unit 2 also improves, permitting substantial reduction in the consumption of electric power, and accordingly, in the running cost of the hot-water supply system.

The present invention is not limited to the foregoing embodiment alone and may be modified in various ways.

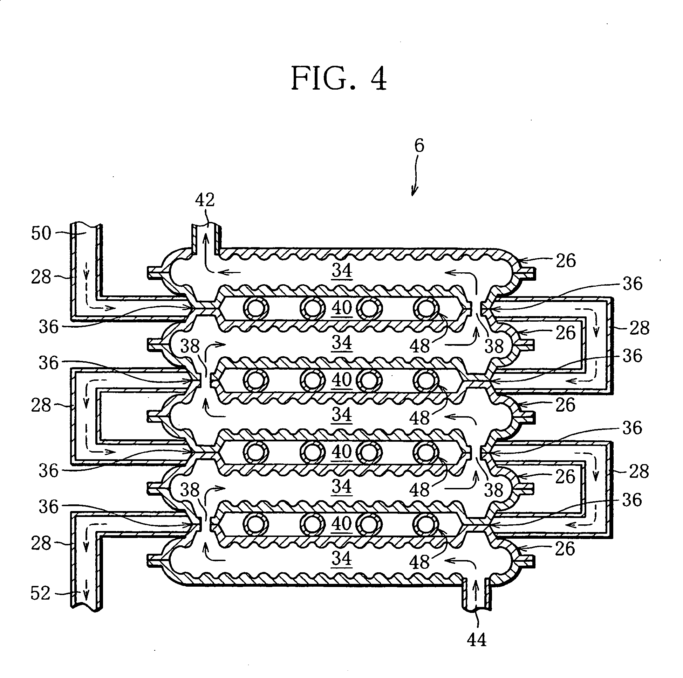

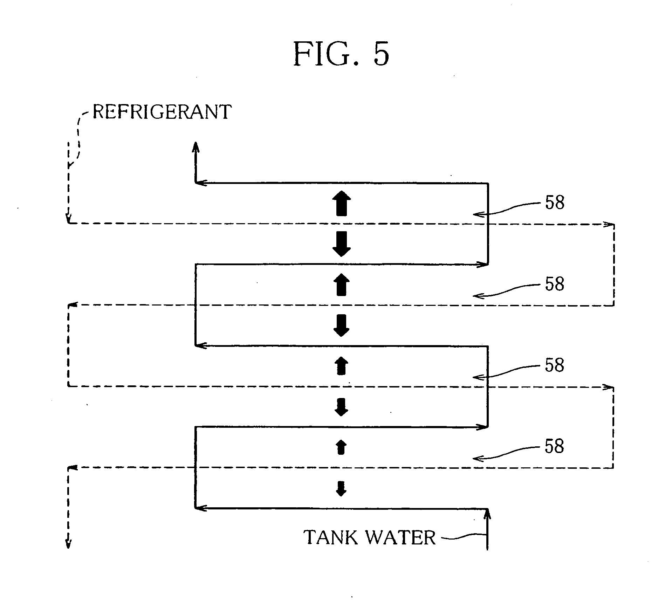

For example, the gas cooler 6 of the above embodiment is the parallel heat exchange type but may alternatively be a so-called series heat exchange type shown in FIGS. 4 and 5. In this modification, the tube 28, except the portions situated in the spaces 40, is laid differently from that of the foregoing embodiment, and also the communication holes 38 are formed in the joints 36 differently from those of the foregoing embodiment such that the heat exchange takes place in stages as the refrigerant and the tank water individually flow along their single channel. Also in this case, the gas cooler 6 can be improved in safety and heat exchange efficiency while at the same time reduced in size, weight and production costs, as in the above embodiment.

In accordance with the modification, the heat exchange between the refrigerant and the tank water takes place in a manner different from that of the parallel heat exchange type. Namely, the heat exchange takes place in stages as shown in FIG. 5. Thus, especially in cases where the heat exchange is effected with the tank water introduced into the gas cooler 6 at a low flow rate, the tank water can be heated to a higher temperature such that the water temperature at the water outlet 42 is significantly higher than that at the water inlet 44. Accordingly, the heat exchange efficiency of the gas cooler 6 can be further improved.

Moreover, the layout of the tube 28 can be simplified because the divergent and convergent headers 54 and 56 are unnecessary. Since the gas cooler 6 of the modification has a construction resembling the one obtained by folding up an ordinary plate-type gas cooler in its longitudinal direction, the gas cooler 6 can be further reduced in size, weight and production costs.

In the foregoing embodiment, only the uppermost and lowermost box bodies, among the stacked box bodies 26, are provided with the water outlet 42 and the water inlet 44, respectively. Alternatively, each of the stacked box bodies 26 may be provided with the water inlet 44 and the water outlet 42 with tank water divergent and convergent headers arranged externally to the box bodies 26, or tank water piping may be arranged outside of the box bodies 26. Also in such cases, the above advantages can be achieved.

Further, in the embodiment and modification described above, the stacked box bodies 26 are five in number, the tube 28 has four meandering sections 48, and each meandering section 48 forming part of the tube 28 has three U-bends. The number of the box bodies 26 to be stacked up, the number of the meandering sections 48 and the number of the U-bends of each meandering section 48 are, however, not limited to the respective numbers mentioned above. Needless to say, the aforementioned advantageous effects can be furthered by increasing the number of the box bodies 26, the number of the meandering sections 48, and the number of the U-bends in each meandering section 48.

Lastly, although in the above embodiment and modification, CO₂ gas is used as the refrigerant, the refrigerant to be used is not limited to CO₂ gas alone. By using CO₂ gas as the refrigerant, however, it is possible to mitigate the load on the global environment while at the same time achieving the aforementioned advantages.

## Claims

1. A gas cooler (6) for a hot-water supply system including a heat pump unit (2) and a hot-water supply unit (4), the gas cooler (6) allowing heat to be transferred between a refrigerant flowing through a refrigerant circulation path (8) of the heat pump unit (2) and tank water flowing through a water circulation path (16) of the hot-water supply unit (4) to heat the tank water to a predetermined temperature, the gas cooler (6) comprising:
a plurality of box bodies (26) stacked up and having a flow channel (34) formed therein for passing the tank water therethrough;
a space (40) defined between adjacent ones of the box bodies (26); and
a tube (28) for passing the refrigerant therethrough, the tube (28) having one or more meandering sections (48),
wherein the meandering section (48) is positioned in the space (40) in contact with the adjacent box bodies (26), each of the box bodies (26) having an un-even inner surface.

2. The gas cooler (6) according to claim 1, **characterized in that** the stacked box bodies (26) have flow channels (34), respectively, connected in parallel with each other, and the tube (28) has two or more meandering sections (48) connected in parallel with each other.

3. The gas cooler (6) according to claim 1, **characterized in that** the stacked box bodies (26) have flow channels (34), respectively, connected in series with each other, and the tube (28) has two or more meandering sections (48) connected in series with each other.

4. The gas cooler (6) according to any one of claim 1 to 3, **characterized by** further comprising at least one joint (36) connecting the adjacent box bodies (26) with each other, and a communication hole (38) formed in the joint (36),
wherein the flow channels (34) communicate with each other through the communication hole (38).

5. The gas cooler (6) according to any one of claims 1 to 4, **characterized in that** the box bodies (26) have a tank water inlet (44) and a tank water outlet (42), and
the box bodies (26) have protuberances formed on inner surfaces thereof in such a manner that heights of the protuberances gradually decrease toward the water inlet (44) and the water outlet (42).

6. The gas cooler (6) according to any one of claims 1 to 5, **characterized in that** the refrigerant and the tank water flow through the tube (28) and the flow channel (34), respectively, generally in counter directions.

7. The gas cooler (6) according to any one of claims 1 to 6, **characterized in that** the refrigerant is CO₂ gas.

## Patentansprüche

1. Gaskühler (6) für ein Heißwasserversorgungssystem, das eine Wärmepumpeneinheit (2) und eine Heißwasserversorgungseinheit (4) enthält, wobei es der Gaskühler (6) ermöglicht, Wärme zwischen einem durch einen Kältemittelzirkulationspfad (8) der Wärmepumpeneinheit (2) fließenden Kältemittel und einem durch einen Wasserzirkulationspfad (16) der Heißwasserversorgungseinheit (4) fließenden Tankwasser zu übertragen, um das Tankwasser auf eine vorbestimmte Temperatur aufzuheizen, wobei der Gaskühler (6) aufweist:
eine Mehrzahl von Behältergehäusen (26), die aufeinander gestapelt sind und einen Durchflusskanal (34) darin gebildet haben, um das Tankwasser durch diesen passieren zu lassen;
einen zwischen nebeneinander liegenden der Behältergehäusen (26) definierten Raum (40); und
ein Rohr (28) zum Passieren des Kältemittels durch dieses, wobei das Rohr (28) einen oder mehrere mäandernde Abschnitte (48) hat, und
wobei der mäandernde Abschnitt (48) in dem Raum (40) in Kontakt mit den nebeneinander liegenden Behältergehäusen (26) positioniert ist, und jedes der Behältergehäuse (26) eine unebene innere Oberfläche hat.

2. Gaskühler (6) gemäß Anspruch 1, **dadurch gekennzeichnet, dass** die gestapelten Behältergehäuse (26) jeweils parallel miteinander verbundene Durchflusskanäle (34) haben, und das Rohr (28) zwei oder mehrere parallel miteinander verbundene mäandernde Abschnitte (48) hat.

3. Gaskühler (6) gemäß Anspruch 1, **dadurch gekennzeichnet, dass** die gestapelten Behältergehäuse (26) jeweils in Reihe miteinander verbundene Durchflusskanäle (34) haben, und das Rohr (28) zwei oder mehrere in Reihe miteinander verbundene mäandernde Abschnitte (48) hat.

4. Gaskühler (6) gemäß einem der Ansprüche 1 bis 3, **gekennzeichnet durch** ein weiteres Aufweisen von zumindest einer Verbindung (36), die die nebeneinander liegenden Behältergehäuse (26) miteinander verbindet, und einem in der Verbindung (36) gebildeten Verbindungsloch (38), wobei die Durchflusskanäle (34) **durch** das Verbindungsloch (38) miteinander verbunden sind.

5. Gaskühler (6) gemäß einem der Ansprüche 1 bis 4, **dadurch gekennzeichnet, dass** die Behältergehäuse (26) einen Tankwassereinlass (44) und einen Tankwasserauslass (42) haben, und
die Behältergehäuse (26) auf inneren Oberflächen davon in einer solchen Weise geformte Erhebungen haben, dass Höhen der Erhebungen allmählich zu dem Wassereinlass (44) und dem Wasserauslass (42) hin abnehmen.

6. Gaskühler (6) gemäß einem der Ansprüche 1 bis 5, **dadurch gekennzeichnet, dass** das Kältemittel und das Tankwasser durch das Rohr (28) und den Durchflusskanal (34) im großen und ganzen jeweils in entgegen gesetzten Richtungen fließen.

7. Gaskühler (6) gemäß einem der Ansprüche 1 bis 6, **dadurch gekennzeichnet, dass** das Kältemittel ein CO₂-Gas ist.

## Revendications

1. Refroidisseur de gaz (6) pour un système d'alimentation en eau chaude comportant une unité de pompe à chaleur (2) et une unité d'alimentation en eau chaude (4), ce refroidisseur de gaz (6) permettant de transférer de la chaleur entre un agent réfrigérant s'écoulant au travers d'un circuit de circulation d'agent réfrigérant (8) de l'unité de pompe à chaleur (2) et l'eau d'un réservoir s'écoulant au travers d'un circuit de circulation d'eau (16) de l'unité d'alimentation en eau chaude (4) pour chauffer l'eau du réservoir à une température prédéterminée, le refroidisseur de gaz (6) comprenant :
- un ensemble de corps de boites (26) empilés et comportant un canal d'écoulement (34) formé à leur partie interne pour faire passer l'eau du réservoir au travers,
- un espace (40) défini entre les corps de boites (26) adjacents, et
- un tube (28) pour faire passer l'agent réfrigérant au travers, ce tube (28) ayant au moins une section comportant des méandres (48), cette section comportant des méandres (48) étant positionnée dans l'espace (40) en contact avec les corps de boites (26) adjacents, chacun de ces corps de boites (26) ayant une surface interne irrégulière.

2. Refroidisseur de gaz (6) conforme à la revendication 1,
**caractérisé en ce que**
les corps de boites empilés (26) comportent des canaux d'écoulement (34) respectivement branchés en parallèle et le tube (28) a au moins deux sections comportant des méandres (48) branchées en parallèle.

3. Refroidisseur de gaz (6) conforme à la revendication 1,
**caractérisé en ce que**
les corps de boites empilés (26) comportent des canaux d'écoulement (34) respectivement branchés en série et le tube (28) a au moins deux sections comportant des méandres (48) branchées en série.

4. Refroidisseur de gaz (6) conforme à l'une quelconque des revendications 1 à 3,
**caractérisé en ce qu'**
il comprend en outre au moins un joint (36) reliant les corps de boites (26) adjacents et un orifice de mise en communication (38) formé dans ce joint (36),
les canaux d'écoulement (34) communiquant entre eux au travers de l'orifice de mise en communication (38).

5. Refroidisseur de gaz (6) conforme à l'une quelconque des revendications 1 à 4,
**caractérisé en ce que**
les corps de boites (26) ont une entrée d'eau du réservoir (44) et une sortie d'eau du réservoir (42), et
les corps de boites (26) comportent des saillies formées sur leur surface interne de sorte que les hauteurs de ces saillies aillent graduellement en décroissant vers l'entrée d'eau (44) et vers la sortie d'eau (42).

6. Refroidisseur de gaz (6) conforme à l'une quelconque des revendications 1 à 5,
**caractérisé en ce que**
l'agent réfrigérant et l'eau du réservoir s'écoulent respectivement, au travers du tube (28) et du canal d'écoulement (34), en règle générale, dans des directions opposées.

7. Refroidisseur de gaz (6) conforme à l'une quelconque des revendications 1 à 6,
**caractérisé en ce que**
l'agent réfrigérant est du CO₂ gazeux.
